Europäisches Patentamt

European Patent Office

Office européen des brevets

(19)

(11) Publication number: **0 013 618**

**A1**

(12)

# EUROPEAN PATENT APPLICATION

(21) Application number: **80300072.8**

(22) Date of filing: **08.01.80**

(51) Int. Cl.³: **F 16 K 7/16**

(30) Priority: **09.01.79 GB 7900805**

(43) Date of publication of application:
**23.07.80 Bulletin 80/15**

(84) Designated Contracting States:
**AT BE CH DE FR IT NL SE**

(71) Applicant: **SAUNDERS VALVE COMPANY LIMITED**

**Cwmbram Gwent NP4 3XX, Wales(GB)**

(72) Inventor: **Trimble, Maurice Wilson**
**5 Meads Close**
**Newport Gwent, Wales(GB)**

(74) Representative: **Hodding, Henry Squarey** et al,
**A.A. THORNTON & CO. Northumberland House 303-306**
**High Holborn**
**London, WC1V 7LE(GB)**

(54) **Diaphragm valves.**

(57) A diaphragm valve (1) comprises a valve body (2) having a diaphragm opening (4) to which is fitted a closure diaphragm (5). The diaphragm seals against a seat (8) formed on a weir (7) of the valve body to close the valve (1) to fluid flow. Tongues (10,11) are moulded integrally with the diaphragm and extend into the flow passage (6) in the region of the central longitudinal plane of the valve. The tongues (10,11) tend to impede flow through the valve when the diaphragm (5) is close to the seat (8) and thus improve the flow characteristics of the valve so that it can be used as a flow control valve.

FIG. 1.

EP 0 013 618 A1

- 1 -

TITLE:  Diaphragm Valves

This invention relates to diaphragm valves, that is to say valves in which a flexible closure diaphragm is forced into engagement with a seat in order to close the flow passage of the valve to fluid flow.

Diaphragm valves are widely used in both liquid and gaseous fluid systems, and have many well recognised advantages. However, such valves do suffer from the disadvantage that the flow characteristics of the valve are non-linear relative to diaphragm travel from the closed position. This problem is particularly accute when the diaphragm is spaced only a relatively small distance from its seat. This tends to render diaphragm valves unsuitable for use as fluid control valves, especially when the valve is operating in the region when the diaphragm is spaced only a small distance from its seat.

According to one aspect of the present invention there is provided a diaphragm valve comprising:  a valve body defining a valve seat;  and a closure diaphragm which, together with the valve body, defines a flow passage through the valve and which is movable between a closed position in which it is in sealing contact with the seat to close the flow passage to fluid flow and a fully open position in which it is spaced from the seat, the diaphragm including at least one tongue projecting into the flow passage adjacent that portion of the diaphragm which seals with the valve seat to act as a baffle to impede flow through the valve when the valve is partly open and the diaphragm is close to the seat as compared with the fully open position.

By suitably choosing the size and shape of the or each tongue the flow characteristics of the valve in the range when the diaphragm is close to the seat can be improved as compared with the characteristics of known valves.

The above and further features and advantages of the invention will become clear from the following description of an embodiment thereof, given by way of example only, reference being had to the accompanying drawings, wherein:

FIGURE 1 is a longitudinal cross sectional view of a portion of a diaphragm valve with the diaphragm in the closed position;

FIGURE 2 is a view corresponding to the central portion of Figure 1, but with the diaphragm in the fully open position;

FIGURE 3 is a cross section on the line III-III of Figure 2;

FIGURE 4 is a view, partly in section, along the flow passage of the valve towards the seat when the diaphragm is spaced a small distance from the seat;  and

FIGURE 5 is a cross section on the line V-V of Figure 4, and

FIGURE 6 is a graphical representation of results.

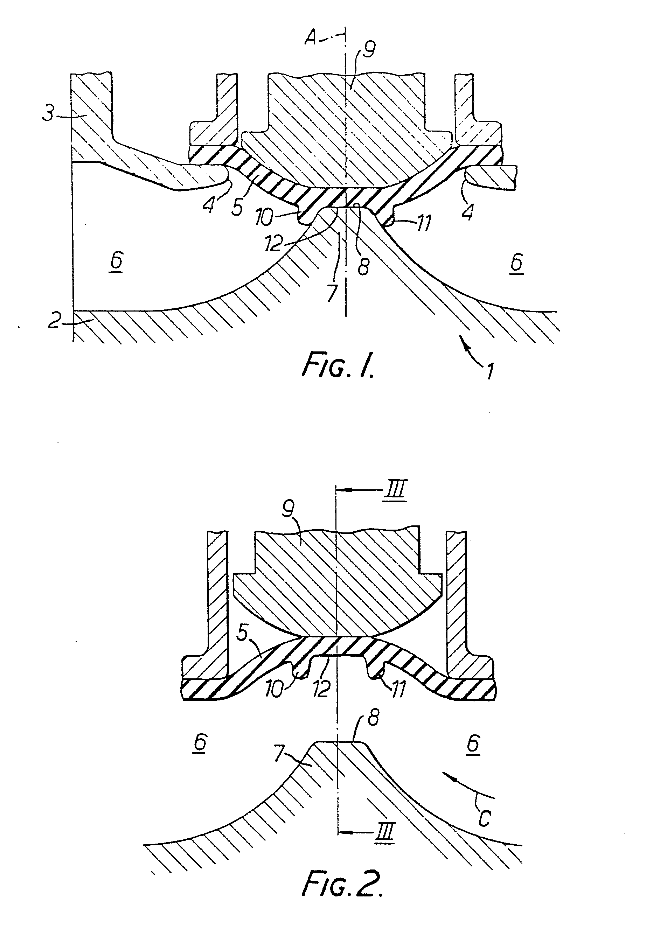

The diaphragm valve 1, a portion of which is shown in the drawings, includes a valve body 2 having end connections 3, only one of which is shown in Figure 1 of the drawings.  A diaphragm opening 4 is defined by the valve body, and a closure diaphragm 5 is secured in sealing engagement with the body to close the diaphragm opening 4. The diaphragm 5 and body 2 together define a flow passage 6 through the valve.

A weir 7 formed by the valve body defines a seat 8 against which the closure diaphragm 5 can be pressed by a compressor 9 to close the valve to fluid flow. Details of the structure of the valve body, weir, and compressor mechanism will be well known to those skilled in the art.

The closure diaphragm 5 includes a pair of tongues 10,11 which project into the flow passage adjacent the region 12 of the diaphragm which seals with the valve seat 8 when the diaphragm is in the closed position. The exact size and shape of the tongues is determined by the size and shape of the valve body and the required flow characteristics. In the embodiment shown the tongues are squat projections extending only a short distance either side of the longitudinal centre line of the valve. However, longer or shorter tongues may be used in certain applications.

In the case where the diaphragm is an integral moulded structure the tongues 10,11 are moulded integrally with the remainder of the diaphragm. The diaphragm will typically be moulded in the shape and configuration shown in Figure 2, in which case the position of the tongues on the diaphragm is chosen such that upon flexing of the diaphragm into the closed position shown in Figure 1 the tongues 10,11 flex away from each other and at the moment of contact with the weir 7 provide a slight interference with the edges of the weir.

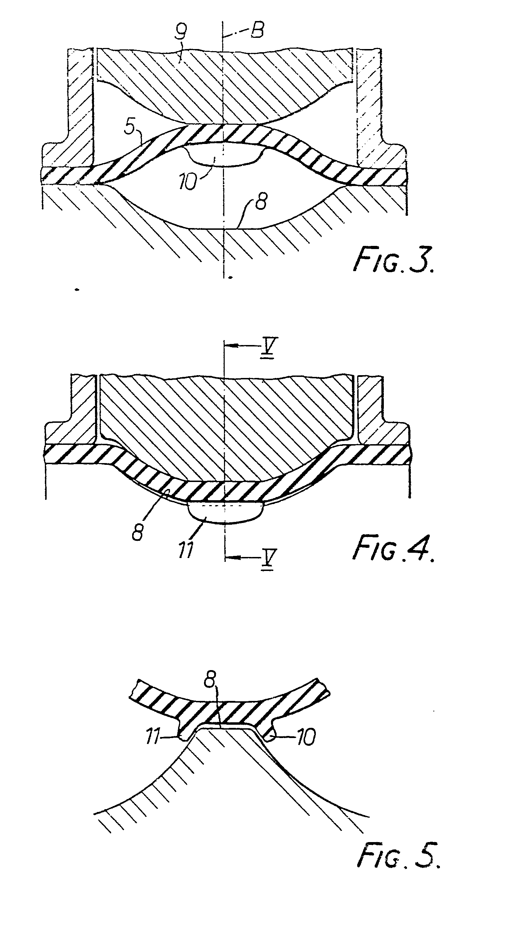

The effect of the tongues on the flow characteristics of the valve will be appreciated by reference to Figures 4 and 5. It will be seen that when the valve is nearly closed, i.e. when the diaphragm is spaced only a small distance from the seat 8, the tongues 10,11 serve as baffles to impede the flow of fluid through the valve. By choosing suitable size and shaped tongues the flow characteristics of the valve can be adjusted to provide desired flow characteristics. Referring to Figures 2 and 3 it will be appreciated that when the valve is fully open the tongues 10,11 have little effect on the flow resistance of the valve.

Although the valve illustrated in the drawings includes two tongues symmetrically disposed on either side of the transverse central plane A of the valve and each symmetrical about the central longitudinal plane B of the valve, it may be desirable in some circumstances to have one or more tongues on one side of the transverse central plane A of the valve only, or to have more than one tongue on both sides of the transverse central plane A. Also, whilst the tongues 10,11 are aligned transversely to the direction C of fluid flow through the valve and extend only part of the way across the flow passage, other orientations may prove desirable in some circumstances. Further, whilst the primary function of the tongues is to improve the flow characteristics of the valve some improvement in the sealing of the valve may be obtained when the valve is fully closed since the tongue on the upstream side of the valve will tend to be pressed into sealing engagement with the weir by fluid pressure on that side of the valve. It may in some circumstances prove desirable to taper the tongues to provide the desired characteristics.

Whilst the above described valve incorporates a diaphragm which is an integral moulded structure, for example of rubber, projections may be included on hard diaphragm facings such as are used in PTFE faced diaphragms.

Whilst it is believed to be preferable to have a slight interference fit between the tongues and the weir, this is by no means essential and beneficial flow control can be obtained even if there is a clearance between the tongues and the weir.

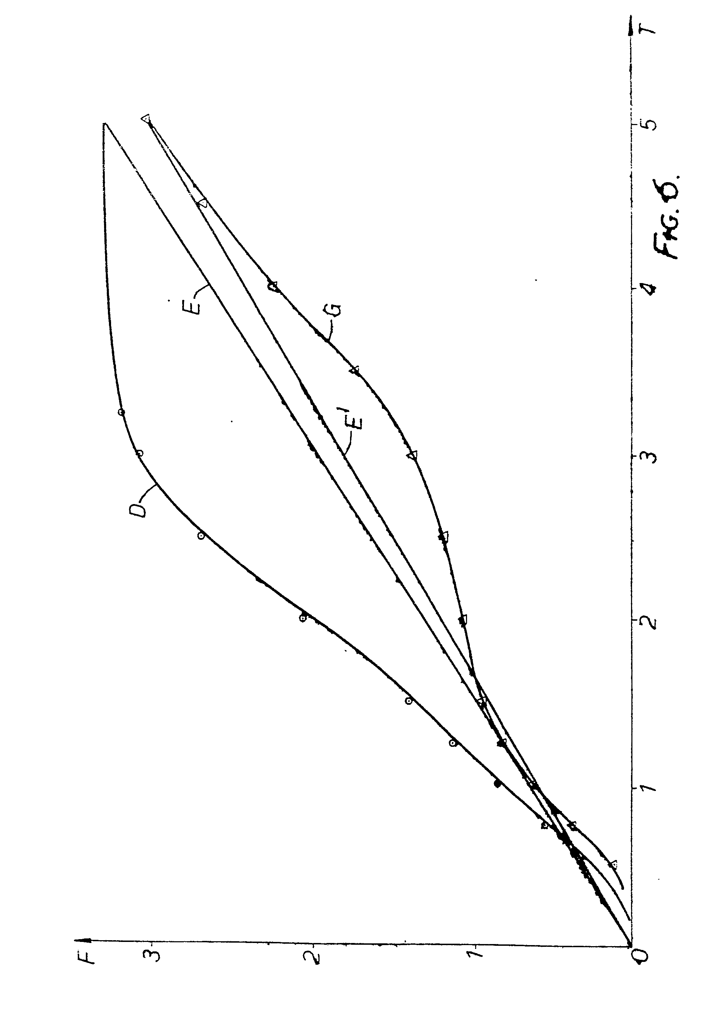

Referring now to Figure 6 there is shown a graphical representation of the results of tests comparing the flow characteristics of a valve fitted with a conventional diaphragm with the flow characteristics of a valve fitted with a diaphragm substantially as shown in Figures 1 to 5. The tests were carried out with a constant pressure drop of 5 cm. Hg. across the valve and Figure 6 shows flow rate F through the valve in Kg of water per second plotted against the number of turns T of the handwheel of the valve from fully closed (0 turns) to fully open (5 turns).

Curve D shows the results for a conventional smooth diaphragm and it will be noted by comparing this curve with an ideal linear characteristic curve E that the conventional diaphragm produces highly non-linear flow rates. This renders a valve fitted with such a diaphragm unsuitable for use as a flow control valve.

Curve G shows the results for the diaphragm substantially according to Figures 1 to 5. It will be noted that the flow rate F through the valve is slightly lower when the valve is fully open than the flow rate through the valve fitted with a conventional diaphragm. However, this reduced maximum flow rate is perfectly acceptable in most uses of the valve. It will be noted by comparing the curve G with the corresponding ideal linear characteristic curve E' that the valve fitted with the diaphragm according to the invention produces a much more linear variation in flow rates than that produced by the valve fitted with a conventional diaphragm. The curve G is sufficiently near to the ideal linear curve E' to render the valve suitable for use as a flow control valve in many applications.

It will be appreciated that the above results illustrate the advantages obtained from one specific embodiment of the invention. Other embodiments will produce different results, and indeed a wide range of
desired flow characteristics can be approximated to
by suitable choice of the particular embodiment of the
invention. For example, a steeper substantially linear
characteristic curve can be obtained by replacing the
tongues 10,11 with a plurality of tongues generally
aligned with the direction of fluid flow through the
valve. Each tongue 10,11 can, for example be replaced
by five teeth-like tongues aligned perpendicular to the
tongues 10,11 and each being generally triangular in both
longitudinal and transverse cross-sections, i.e. as
viewed in both Figures 1 and 3.

CLAIMS

1.      A diaphragm valve comprising:  a valve body defining a valve seat;  and a closure diaphragm which, together with the valve body, defines a flow passage through the valve and which is movable between a closed position in which it is in sealing contact with the seat to close the flow passage to fluid flow and a fully open position in which it is spaced from the seat, characterised in that the diaphragm (5) including at least one tongue (10,11) projecting into the flow passage (6) adjacent that portion (12) of the diaphragm which seals with the valve seat (8) to act as a baffle to impede flow through the valve (1) when the valve is partly open and the diaphragm (5) is close to the seat (8) as compared with the fully open position.

2.      A diaphragm valve according to claim 1 characterised in that the or each tongue (10,11) is aligned transversely to the direction of fluid flow (C) through the valve (1) and extends only part of the way across the flow passage (6).

3.      A diaphragm valve according to claim 1 characterised in that there is a single tongue (10,11)    · on each side of the central transverse plane (A) of the valve (1), and the tongues (10,11) are each symmetrical about the central longitudinal plane (B) of the valve (1).

4.      A diaphragm valve according to any preceding claim wherein the valve body includes a weir upon which the valve seat is formed characterised in that the or each tongue (10,11) is an interference fit with the weir (7) when the valve is closed to fluid flow.

- 8 -

5.      A diaphragm valve according to any preceding claim characterised in that the free edge of the or each tongue (10,11) is convexly curved when viewed along the flow passage (6) in the direction of fluid flow (C).

6.      A diaphragm valve according to claim 1 characterised in that a plurality of tongues are provided on each side of the central transverse plane (A) of the valve (1), each tongue being an elongate toothlike projection which is aligned with the direction (C) of flow of fluid through the valve (1).

7.      A diaphragm valve according to claim 6 characterised in that each tongue is triangular in both longitudinal and transverse cross-section.

8.      A diaphragm valve according to any preceding claim characterised in that the or each tongue (10,11) is moulded integrally with the diaphragm.

9.      A diaphragm valve according to any of claims 1 to 7 characterised in that the diaphragm (5) includes a chemically resistant facing and a resilient backing and the or each tongue is moulded integrally with the facing.

0013618

1/3

Fig. 1.

Fig. 2.

FIG. 3.

FIG. 4.

FIG. 5.

Fig. 6.

0013618

Application number

EP 80 30 0072

## European Patent Office

### EUROPEAN SEARCH REPORT

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>CH - A - 316 891</u> (JATON)<br>* Page 2, line 26 - page 3, line 63 * | 1 | F 16 K 7/16 |
| A | <u>GB - A - 898 049</u> (PARFONRY)<br>* Page 2, lines 8-71 * | 1 | |
| A | <u>FR - A - 2 033 931</u> (CLOUTH)<br>* Page 1, line 37 - page 2, line 9 * | 1 | |

---- 

TECHNICAL FIELDS SEARCHED (Int.Cl. ³)

F 16 K 7/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-04-1980 | VERELST |

EPO Form 1503.1  06.78